# EUROPEAN PATENT APPLICATION

(11) **EP 1 366 951 A2**
(43) Date of publication of application: **03.12.2003**
(21) Application number: 03011744.4
(22) Date of filing: 23.05.2003
(51) Int. Cl.: B60N 2/58, B60N 2/44, B60N 3/00, B60R 7/04

(54) **A rear covering for a seat back of a vehicle seat**

(30) Priority: 28.05.2002 IT TO20020450
(71) Applicant: Selmat Automotive S.p.A., 10090 Cascine Vica - Rivoli (IT)
(72) Inventor: Maccherrone, Michele, 10123, Torino (IT)
(74) Representative: Cerbaro, Elena, Dr.

(57) **Abstract**

A rear covering (4) for a seat back (1) of a vehicle seat, this rear covering (4) comprising a plate (6) adapted to be connected to the seat back (1) and comprising an intermediate hollow portion (10) defining a stowage space (8) for articles; the space (8) is obtained in the opposite side of the seat back (1) and is closed by a flap (15) which defines a support surface (18) and is connected to the intermediate hollow portion (10) such that it can be manually released and the support surface (18) removed.

## Description

The present invention relates to a rear covering for a seat back of a vehicle seat.

In many motor vehicles, the back of the front seat disposed alongside the driver comprises a cushion body and a rear plate which covers the cushion body and is provided with a plurality of outwardly open housings which can be used to store relatively small articles to be transported, bottles, papers, etc., when the seat back is inclined forward and reaches a substantially horizontal position in which it is superimposed on a sitting portion of the relative seat.

It is necessary to keep the passenger space of the vehicle tidy and, at the same time, to make it easy to take up and use materials supported on the forwardly inclined seat back and, in particular, to facilitate writing operations and the transport of sheets or pads of paper.

The object of the present invention is to provide a rear covering for a seat back of a vehicle seat, which makes it possible simply and economically to meet the above-mentioned need.

The present invention therefore relates to a rear covering for a seat back of a vehicle seat; the rear covering comprising a plate adapted to be connected to the seat back and comprising a hollow portion defining a stowage space for articles adapted to be extended outwardly with respect to the seat back, characterised in that it further comprises a flap closing this space having a support surface, and means for the connection of the flap to the hollow portion, wherein these connection means can be manually released so that the support surface can be removed from the hollow portion.

The invention will be described below with reference to the accompanying drawings, which show a non-limiting embodiment thereof, and in which:
Figs. 1 and 2 are perspective views of a preferred embodiment of a rear covering for a seat back of a vehicle seat shown in two operational configurations;
Fig. 3 is a cross-section along the line III-III of Fig. 2 and shows, in diagrammatical form and on an enlarged scale, a detail of the covering of Fig. 2;
Figs. 4 and 5 are Figures similar to Fig. 3 and show two variants of the detail of Fig. 3.

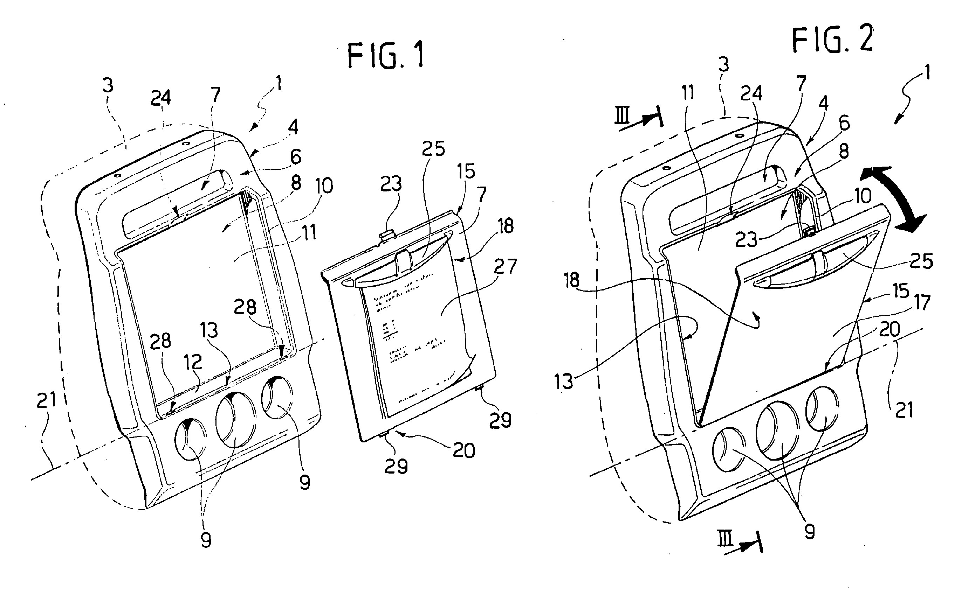

In Figs. 1 and 2, a seat back of a vehicle seat, in particular a front seat disposed alongside the driver, is shown overall by 1. The seat back 1 is hinged on a sitting portion of the seat (not shown), may be forwardly inclined to reach a substantially horizontal position in which it is superimposed on this sitting portion, comprises a front cushion body 3 (shown partially in dashed lines) and bears an additional rear covering structure 4, i.e. disposed on the side opposite the body 3.

The stucture 4 is made from thermoplastic material is commonly called the seat rear , and comprises a shaped plate 6 which is rigidly connected to the seat back 1, for instance by screws or by embedding, and has a plurality of stowage spaces 7, 8 and 9 for articles disposed on the opposite side, i.e. externally, with respect to the body 3. The space 8 has a depth of approximately 30 mm and a relatively large height and width so that it can, for instance, house a laptop computer (not shown) and is defined by an intermediate hollow portion 10 which comprises a substantially rectangular base wall 11 and a side wall 12 whose outer edge forms an entrance 13 to the space 8.

The structure 4 further comprises a flap 15 preferably formed in one piece from plastic material and comprising an intermediate wall 17 which forms a support surface 18 and is coupled to the wall 12 by means of a connection device 20 which enables the flap 15 to rotate about a hinge axis 21 between an open position (Fig. 2) and a closed position (not shown) of the entrance 13.

On the opposite side of the device 20, the wall 17 ends in an elastic closure lug 23 which is integral with the flap 15 and is adapted to snap into a slot 24 provided in the portion 10 in order to keep the flap 15 in its closed position.

With further reference to Figs. 1 and 2, the structure 4 further comprises a clip 25 hinged on the wall 17 and an elastic member (not shown in the accompanying drawings) interposed between the clip 25 and the wall 17 in order to enable the clip 25 to exert a pressure on the flap 15 and thus clip a sheet or pad of paper 27 on the surface 18.

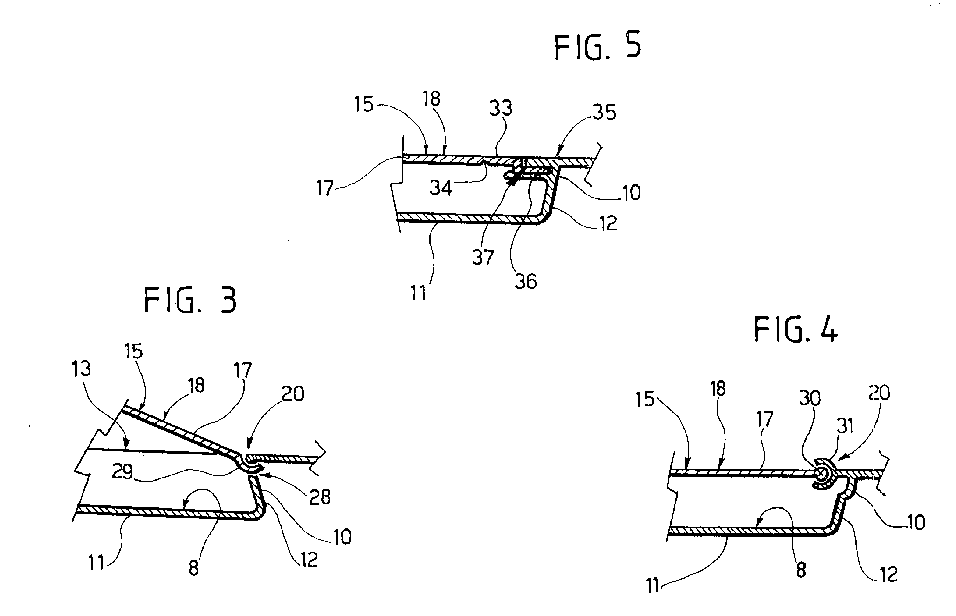

As shown in Fig. 1, the flap 15 may removed from the portion 10 as a result of the fact that the device 20 can be released by a simple manual action, without having to use equipment or tools. More particularly, with reference to Fig. 3, the device 20 comprises a pair of openings 28 provided in the wall 12 and a pair of lugs 29, which extend in a projecting and rigid manner from an edge of the wall 17 in order to slide through the openings 28 during the rotation of the flap 15 about the axis 21.

By rotating the flap 15 beyond a predetermined limit angle, it is possible to disengage the lugs 29 from the relative openings 28. According to variants (not shown), springs or elastic portions may be provided to maintain the flap 15 in the open and/or closed positions and/or to cause the lugs 29 to engage in the openings 28.

Figs. 4 and 5 show, diagrammatically, two variants of the structure 4, whose component parts bear, where possible, the same reference numerals as in Fig. 3.

In the variant of Fig. 4, the device 20 comprises a hinge pin 30 rigid with the edge of the wall 17 and a cylindrical housing 31 which is integral with the wall 12, houses the pin 30 such that it may rotate about the axis 21 (not shown in Fig. 4), is open along its generatrix and can be elastically deformed for the snap engagement and disengagement of the pin 30, by exerting manual pressure in the direction perpendicular to the axis 21. As an alternative, or in combination with the deformability of the housing 31, the pin 30 could also be elastically yielding for snap locking in the housing 31.

In the variant of Fig. 5, the flap 15 comprises an end portion 33 which is hinged on the wall 17 about the axis 21 (not shown in Fig. 5) by means of a virtual hinge 34 formed by a transverse weakened portion of the flap 15 and is connected to the wall 12 in a fixed position by a connection device 35 that can be released. In the embodiment shown, the device 35 comprises a tongue 36 which is rigid with the portion 33 and is inserted by pressure or snap-locking in a relative groove 37 obtained integrally with the portion 10.

The assembly of the virtual hinge 34 and the device 35 therefore replaces the device 20 of the solutions shown in Figs. 1 to 4 and makes it possible to keep the portion 33 fixed and rotate only the wall 17.

In operation, the flap 15 acts not only as a wall closing the space 8, but also as a detachable support surface for papers 27. Drivers who need to carry and write on papers 27 in areas outside the passenger space and require a support surface for these papers 27 merely need therefore to release the device 20, 35 in order to remove the flap 15 from the plate 6. Once the writing operations have been completed outside the passenger space, the driver may readily reconnect the flap 15 to the plate 6.

It will be appreciated from the above that the structure 4 covering the seat back 1 facilitate writing and the transport of papers 27 outside the passenger space and makes it possible to keep this passenger space tidy, as it may be configured in two different ways, i.e. by removing the flap 15 to form a moving support surface or desk for the papers 27 or by leaving the flap 15 coupled to the portion 10 to close the space 8.

The flap 15 can be removed and reconnected very rapidly as a result of the snap-locking of the pin 30, or by means of the simple insertion of the lugs 29 in the openings 28 or the tongue 36 in the groove 37.

Moreover, the structure 4 is extremely simple to produce, as the parts of the device 20, 35 are made in one piece with the wall 12 and with the flap 15.

The clip 25 borne directly by the flap 15 also makes it possible to keep papers 27 tidily on the surface 18.

It will be appreciated from the above that modifications and variations that do not depart from the scope of protection of the present invention may be made to the covering structure 4 as described.

In particular, the coupling of the flap 15 to the plate 6 could differ from that illustrated and the device 20, 35 could, for instance, be of the bayonet type, and/or the flap 15 could slide along a guide with respect to the plate 6 rather than being hinged.

## Claims

1. A rear covering (4) for a seat back (1) of a vehicle seat, this rear covering comprising a plate (6) adapted to be connected to the seat back (1) and comprising a hollow portion (10) defining a stowage space (8) for articles adapted to be extended outwardly with respect to the seat back (1), **characterised in that** it further comprises a flap (15) closing this space (8) having a support surface (18), and means (20, 35) for the connection of the flap (15) to the hollow portion (10), wherein these connection means (20, 35) can be manually released so that the support surface (18) can be removed from the hollow portion (10).

2. A rear covering as claimed in claim 1, **characterised in that** it further comprises retaining means (25) borne directly by the flap (15) in order to hold at least a sheet of paper (27) on the support surface (18).

3. A rear covering as claimed in claim 1 or 2, **characterised in that** the connection means (20, 35) comprise at least one lug (30) borne by either the flap (15) or the hollow portion (10) and at least one housing (31) borne by the other of the hollow portion (10) and flap (15), the lug (30) and the housing (31) being snap-locked together.

4. A rear covering as claimed in claim 1 or 2, **characterised in that** the connection means (20) comprise at least one lug (29) borne by either the flap (15) or the hollow portion (10) and a housing (29) borne by the other of the hollow portion (10) and flap (15), the lug (29) and the housing (28) being coupled together in a sliding manner so that they can be detached from one another.

5. A rear covering as claimed in claim 3 or 4, **characterised in that** the lug (29, 30, 36) and the housing (28, 31, 37) are formed integrally with the flap (15) and with the hollow portion (10).

6. A rear covering as claimed in claim 5, **characterised in that** the flap (15) is made in one piece from plastic material.

7. A rear covering as claimed in any one of claims 1 to 6, **characterised in that** it comprises hinge means (28, 29; 30, 31; 35) to enable the flap (15) to rotate between an open and closed position of the space (8) when the flap (15) is connected to the hollow portion (10).

8. A rear covering as claimed in claim 7, **characterised in that** the hinge means (28, 29; 30, 31; 35) form part of the connection means (20).

9. A rear covering as claimed in claim 8, **characterised in that** the hinge means (30, 31) comprise a cylindrical seat (31) borne by the hollow portion (10) and a hinge pin (30) borne in a projecting manner by the flap (15) and engaging the cylindrical seat (31) in a rotary manner.

10. A rear covering as claimed in claim 8, **characterised in that** the hinge means (28, 29) comprise an opening (28) obtained in the hollow portion (10) and a lug (29) borne in a projecting manner by the flap (15) and sliding through the opening (28).

11. A rear covering as claimed in claim 7, **characterised in that** the flap (15) comprises an end portion (33) connected in a fixed position to the hollow portion (10), the hinge means (35) comprising a weakened area forming a virtual hinge (34) interposed between the support surface (18) and the end portion (33).

12. A rear covering as claimed in any one of claims 7 to 11, **characterised in that** it comprises closure means (23, 24) interposed between the hollow portion (10) and the flap (15) in order to keep the flap (15) in its closed position.
